(19) **Europäisches Patentamt**
**European Patent Office**
**Office européen des brevets**

(11) **EP 0 322 830 B2**

(12) **NEUE EUROPÄISCHE PATENTSCHRIFT**

(45) Veröffentlichungstag und Bekanntmachung des Hinweises auf die Entscheidung über den Einspruch:
**28.08.1996 Patentblatt 1996/35**

(51) Int. Cl.[6]: **B01D 19/04**

(45) Hinweis auf die Patenterteilung:
**12.08.1992 Patentblatt 1992/33**

(21) Anmeldenummer: **88121650.1**

(22) Anmeldetag: **24.12.1988**

(54) **Entschäumer auf Basis von Öl-in-Wasser-Emulsionen**

Defoamer based on an oil-in-water emulsion

Antimousse à base d'une émulsion huile dans eau

(84) Benannte Vertragsstaaten:
**AT BE CH DE ES FR GB IT LI NL SE**

(30) Priorität: **31.12.1987 DE 3744593**

(43) Veröffentlichungstag der Anmeldung:
**05.07.1989 Patentblatt 1989/27**

(73) Patentinhaber: **BASF Aktiengesellschaft**
**67063 Ludwigshafen (DE)**

(72) Erfinder:
• **De Clercq, Arnold, Dr.**
**D-6716 Dirmstein (DE)**

• **Bergold, Wolfram, Dr.**
**D-6900 Heidelberg (DE)**
• **Degen, Hans-Jürgen, Dr.**
**D-6143 Lorsch (DE)**
• **Melzer, Jaroslav**
**D-6700 Ludwigshafen (DE)**

(56) Entgegenhaltungen:
| EP-A- 0 230 977 | DE-A- 3 001 387 |
| DE-A- 3 401 695 | DE-C- 2 157 033 |
| US-A- 2 390 212 | US-A- 3 505 742 |

• **Ullmanns Enzyklopädie der technischen Chemie, 4. Aufl., Band 24, Verlag Chemie GmbH, 1983, Seiten 1 - 21**

EP 0 322 830 B2

**Beschreibung**

Aus der US-A-4 009 119 ist ein Verfahren zum Entschäumen wäßriger Systeme mittels Emulsionen bekannt, die $C_{12}$- bis $C_{22}$-Alkanole und/oder $C_{12}$- bis $C_{22}$-Fettsäureester zwei- oder dreiwertiger Alkohole, sowie Paraffinöl und/oder $C_{12}$- bis $C_{22}$-Fettsäuren als Entschäumer sowie an sich bekannte Zusätze grenzflächenaktiver Stoffe als Emulgatoren enthalten. Die emulgierten wasserunlöslichen Stoffe haben eine mittlere Teilchengröße von 4 bis 9 µm. Die bekannten Entschäumer-Emulsionen haben den Nachteil, daß sie bei der Lagerung aufrahmen und zum Teil sogar so stark verdicken, daß solche Mischungen dann nicht mehr gepumpt werden können.

Aus der US-A-4,664,844 ist bekannt, Entschäumer auf Basis von Öl-in-Wasser-Emulsionen, bei denen die Ölphase der Emulsion

(a) einen $C_{12}$- bis $C_{26}$-Alkohol, Destillationsrückstände, die bei der Herstellung von Alkoholen mit einer höheren Kohlenstoffzahl durch Oxosynthese oder nach dem Ziegler-Verfahren erhalten worden und gegebenenfalls noch alkoxyliert sind und/oder
(b) einen Fettsäureester von $C_{12}$- bis $C_{22}$-Carbonsäuren mit einem ein-bis dreiwertigen $C_1$- bis $C_{18}$-Alkohol und gegebenenfalls
(c) einen Kohlenwasserstoff mit einem Siedepunkt oberhalb von 200°C oder Fettsäuren mit 12 bis 22 Kohlenstoffatomen

enthält, zu 15 bis 60 Gew.% am Aufbau der Emulsion beteiligt ist und eine mittlere Teilchengröße von 0,5 bis 15 µm hat, durch Zusatz von 0,05 bis 0,5 Gew.% eines hochmolekularen, wasserlöslichen Homo- oder Copolymerisats von Acrylsäure, Methacrylsäure, Acrylamid oder Methacrylamid gegen Viskositätserhöhung und Aufrahmen bei der Lagerung zu stabilisieren.

Bekanntlich verlieren Entschäumer auf Basis von Öl-in-Wasser-Emulsionen, die üblicherweise bei der Herstellung von Papier eingesetzt werden, an Wirksamkeit, wenn die Temperatur des zu entschäumenden wäßrigen Systems auf über 35°C ansteigt. Bei Temperaturen, die oberhalb von 50°C liegen, tritt dann bei Einsatz der bekannten Öl-in-Wasser-Emulsionen ein noch schnellerer Abfall der Wirksamkeit der Entschäumer ein. Da die Wasserkreisläufe in den Papierfabriken immer häufiger geschlossen werden, resultiert daraus ein Temperaturanstieg des im Kreislauf geführten Wassers bei der Papierherstellung, so daß die Wirksamkeit der bisher verwendeten Entschäumer deutlich absinkt.

Aus der DE-A- 3 001 387 sind wäßrige, emulgatorhaltige Suspensionen bekannt, die höher schmelzende aliphatische Alkohole und bei Raumtemperatur flüssige Kohlenwasserstoffe enthalten. Die Ölphase der Öl-in-Wasser-Emulsionen kann gegebenenfalls noch weitere Komponenten enthalten, z.B. höher schmelzende nichtaromatische Kohlenwasserstoffe, Fettsäuren oder deren Derivate, wie beispielsweise Fettsäureester, Bienenwachs, Carnaubawachs, Japanwachs und Montanwachs. Die Öl-in-Wasser-Emulsionen werden als Entschäumer verwendet.

Der Erfindung liegt die Aufgabe zugrunde, Entschäumer zur Verfügung zu stellen, die auch bei Temperaturen oberhalb von 35°C ihre Wirksamkeit behalten bzw. sie nicht in dem Maße verlieren wie die bekannten Entschäumer.

Die Aufgabe wird erfindungsgemäß gelöst mit Entschäumern auf Basis von Öl-in-Wasser-Emulsionen, bei denen die Ölphase der Emulsionen

(a) einen $C_{12}$- bis $C_{26}$-Alkohol, Destillationsrückstände, die bei der Herstellung von Alkoholen mit einer höheren Kohlenstoffzahl durch Oxosynthese oder nach dem Ziegler-Verfahren erhältlich und die gegebenenfalls noch alkoxyliert sind,
(b) einen Fettsäureester von $C_{12}$- bis $C_{22}$-Carbonsäuren mit einem ein-bis dreiwertigen $C_1$- bis $C_{18}$-Alkohol und gegebenenfalls
(c) einen Kohlenwasserstoff mit einem Siedepunkt oberhalb von 200°C oder Fettsäuren mit 12 bis 22 Kohlenstoffatomen

enthält, zu 5 bis 50 Gew.% am Aufbau der Emulsion beteiligt ist und eine mittlere Teilchengröße von < 25 µm hat, wenn 5 bis 50 Gew.% der Komponenten (a) und (b) der Ölphase der Öl-in-Wasser-Emulsionen durch

(d) mindestens eine, bei einer Temperatur oberhalb von 70°C schmelzenden Verbindung aus der Gruppe der Fettalkohole mit mindestens 28 C-Atomen und der Addukte von $C_2$- bis $C_4$-Alkylenoxiden an mindestens 28 C-Atome enthaltende Alkohole ersetzt sind.

Die Entschäumer werden vorzugsweise bei der Papierherstellung zur Schaumbekämpfung in wäßrigen Systemen verwendet, deren Temperatur oberhalb von 35°C liegt.

Die Komponente (a) der Öl-in-Wasser-Emulsionen besteht vor allem aus natürlichen oder synthetischen Alkoholen mit 12 bis 26 Kohlenstoffatomen oder Alkoholgemischen Beispiele sind Myristylalkohol, Cetylalkohol und Stearylalkohol. Die synthetischen Alkohole, die beispielsweise nach dem Ziegler-Verfahren durch Oxidation von Aluminiumalkylen

2

erhältlich sind, sind gesättigte, geradkettige, unverzweigte Alkohole. Synthetische Alkohole werden auch durch Oxosynthese erhalten. Hierbei handelt es sich in der Regel um Alkoholgemische. Als Komponente (a) der Ölphase der Entschäumeremulsionen können außerdem Destillationsrückstände, die bei der Herstellung der vorstehend genannten Alkohole durch Oxosynthese oder nach dem Ziegler-Verfahren erhalten werden, verwendet werden. Als Bestandteil (a) der Ölphase der Entschäumeremulsionen eignen sich auch alkoxylierte Destillationsrückstände, die bei dem obengenannten Verfahren zur Herstellung von höheren Alkoholen durch Oxosynthese oder nach dem Ziegler-Verfahren herstellbar sind. Man erhält die oxalkylierten Destillationsrückstände dadurch, daß man die obengenannten Destillationsrückstände mit Ethylenoxid oder mit Propylenoxid oder auch mit einer Mischung aus Ethylenoxid und Propylenoxid umsetzt. Pro OH-Gruppe des Alkohols im Destillationsrückstand werden bis zu 5 Ethylenoxid- bzw. Propylenoxidgruppen angelagert. Vorzugsweise addiert man pro OH-Gruppe des Alkohols im Destillationsrückstand 1 bis 2 Ethylenoxidgruppen.

Als Komponente (b) der Ölphase der Entschäumer-Emulsion verwendet man Fettsäureester von $C_{12}$- bis $C_{22}$-Carbonsäuren mit einem ein- bis dreiwertigen $C_1$- bis $C_{18}$-Alkohol. Die Fettsäuren, die den Estern zugrundeliegen, sind beispielsweise Laurylsäure, Myristinsäure, Palmitinsäure, Stearinsäure, Arachinsäure und Behensäure. Vorzugsweise verwendet man Palmitinsäure oder Stearinsäure. Man kann einwertige $C_1$- bis $C_{18}$-Alkohole zur Veresterung der genannten Carbonsäuren verwenden, z.B. Methanol, Ethanol, Propanol, Butanol, Hexanol, Decanol und Stearylalkohol als auch zweiwertige Alkohole, wie Ethylenglykol oder dreiwertige Alkohole wie Glycerin. Die mehrwertigen Alkohole können vollständig oder teilweise verestert sein.

Die Ölphase der Emulsion kann zusätzlich noch von einer weiteren Klasse wasserunlöslicher Verbindungen gebildet werden, die im folgenden als Komponente (c) bezeichnet wird. Die Verbindungen der Komponente (c) können bis zu 50 Gew.%, bezogen auf die Komponenten (a) und (b) am Aufbau der Ölphase der Entschäumeremulsionen beteiligt sein. Sie können entweder einer Mischung aus den Komponenten (a) und (b) oder jeder der unter (a) oder (b) genannten Verbindungen zugesetzt werden. Als Komponente (c) eignen sich Kohlenwasserstoffe mit einem Siedepunkt bei 1013 mbar von mehr als 200°C und einem Stockpunkt unter 0°C oder Fettsäuren mit 12 bis 22 Kohlenstoffatomen. Vorzugsweise eignen sich als Kohlenwaserstoffe Paraffinöle, wie die im Handel üblichen Paraffingemische, die auch als Weißöl bezeichnet werden.

Erfindungsgemäß sind 5 bis 50 Gew.% der Komponenten (a) und (b) der Ölphase der Öl-in-Wasser-Emulsionen durch eine Gruppe von Verbindungen ersetzt, die bei Temperaturen oberhalb von 70°C schmelzen. Zu dieser Gruppe von Verbindungen gehören Fettalkohole mit mindestens 28 C-Atomen und Addukte von $C_2$- bis $C_4$-Alkylenoxyoen an mindestens 28 C-Atome enthaltende Alkohole,

Fettalkohole mit mindestens 28 C-Atomen sind ebenfalls im Handel erhältlich. Es handelt sich hierbei um einwertige Alkohole. Handelsüblich sind beispielsweise Fettalkohole, die 28 bis 48 C-Atome enthalten. Als Komponente (d) der Entschäumer können selbstverständlich auch Fettalkohole eingesetzt werden, die eine wesentlich höhere Anzahl von Kohlenstoffatomen im Molekül enthalten. Als Komponente (d) eignen sich auch Alkylenoxydaddukte der Alkohole mit mindestens 28 C-Atomen. Diese Alkylenoxydaddukte werden erhalten durch Umsetzung dieser Alkohole mit Ethylenoxyd, Propylenoxyd und/oder Butylenoxyden. Pro Mol Alkohol können bis zu 100 Alkylenoxyd-Einheiten addiert werden. Vorzugsweise verwendet man von den Alkylenoxydaddukten die Umsetzungsprodukte von mindestens 28 C-Atome enthaltenden Alkoholen mit Ethylenoxyd im Molverhältnis 1 : 5 bis 80.

Die Komponenten (a) und (b) können in jedem beliebigen Verhältnis zur Herstellung der Entschäumer verwendet werden. Jede dieser beiden Komponenten kann allein oder in Mischung mit der anderen die Ölphase der Entschäumer bilden. In der Praxis haben sich beispielsweise Mischungen aus (a) und (b) besonders bewährt, die 40 bis 60 Gew.% der Komponente (a) und 60 bis 40 Gew.% der Komponente (b) enthalten. Die Ölphase der Öl-in-Wasser-Emulsionen kann gegebenenfalls noch zusätzlich mindestens eine Verbindung der Gruppe (c) enthalten. Wesentlich ist jedoch, daß die Ölphase der Öl-in-Wasser-Emulsionen mindestens eine Verbindung der Gruppe (d) enthält. Das bedeutet, daß die Ölphase der EncschäumerEmulsionen notwendigerweise eine der folgenden Mischungen enthält: (a) und (d), (b) und (d) sowie (a), (b) und (d). Die Verbindungen der Komponente (c) können gegebenenfalls bei allen drei oben aufgezählten Möglichkeiten der Zusammensetzung der Ölphase verwendet werden. Die Komponente (d) ersetzt dabei 5 bis 50, vorzugsweise 10 bis 35 Gew.% der Komponenten (a) und (b) der Ölphase der Öl-in-Wasser-Emulsionen, so daß 95 bis 50, vorzugsweise 90 bis 65 Gew.% der Ölphase aus den Komponenten (a), (b) und gegebenenfalls (c) bestehen. Die gesamte Ölphase ist zu 5 bis 50 Gew.% am Aufbau der Öl-in-Wasser-Emulsionen beteiligt, während der Anteil der wäßrigen Phase am Aufbau der Öl-in-Wasser-Emulsionen 95 bis 50 Gew.% beträgt, wobei sich die Gewichtsprozente jeweils zu 100 addieren.

Als Komponente (d) verwendet man vorzugsweise $C_{28}$- bis $C_{48}$-Alkohole, Addukte von Ethylenoxyd an $C_{28}$- bis $C_{48}$-Alkohole oder Mischungen der genannten Verbindungen. Die Herstellung der erfindungsgemäßen Entschäumer erfolgt vorzugsweise so, daß man zunächst die Verbindungen der Komponente (d) mit den Verbindungen der Komponente (a) und/oder (b) und gegebenenfalls (c) schmilzt und die dabei erhaltene Schmelze anschließend in Wasser emulgiert. Um eine homogene Schmelze aus den vorstehend genannten Komponenten zu erhalten, ist es oft erforderlich, Schmelztemperaturen von oberhalb 100°C anzuwenden. Das Aufschmelzen der Mischungen (a) bis (d) erfolgt üblicherweise in dem Temperaturbereich von 50 bis 140°C.

Zur Emulgierung der Ölphase in die wäßrige Phase verwendet man die üblicherweise in Betracht kommenden grenzflächenaktiven Stoffe, die einen HLB-Wert von mehr als 6 haben. Es handelt sich bei diesen grenzflächenaktiven Stoffen um Öl-in-Wasser-Emulgatoren bzw. um typische Netzmittel. Von den grenzflächenaktiven Stoffen kann man anionische, kationische oder nichtionische Verbindungen verwenden. Bevorzugt werden anionische oder nichtionische bzw. Mischungen aus anionischen und nichtionischen grenzflächenaktiven Stoffen eingesetzt. Stoffe der genannten Art sind beispielsweise Natrium- oder Ammoniumsalze höherer Fettsäuren, wie Ammoniumoleat oder -stearat, oxalkylierte Alkylphenole, wie Nonylphenol oder Isooctylphenol, die im Molverhältnis 1:2 bis 50 mit Ethylenoxid umgesetzt sind, oxethylierte ungesättigte Öle, z.B. die Reaktionsprodukte aus 1 Mol Rizinusöl und 30 bis 40 Mol Ethylenoxid oder die Umsetzungsprodukte aus 1 Mol Spermölalkohol mit 60 bis 80 Mol Ethylenoxid. Als Emulgatoren werden auch vorzugsweise sulfierte Oxethylierungsprodukte von Nonylphenol oder Octylphenol eingesetzt, die als Natrium- oder Ammoniumsalz der entsprechenden Schwefelsäurehalbester vorliegen. 100 Gew.-Teile der Öl-in-Wasser-Emulsionen enthalten üblicherweise 0,5 bis 5 Gew.-Teile eines Emulgators oder eines Emulgatorgemisches. Die Hauptmenge des Emulgators ist in der wäßrigen Phase gelöst.

Außer den bereits genannten Emulgatoren kann man noch Schutzkolloide, wie hochmolekulare Polysaccharide und Seifen oder andere übliche Zusatzstoffe, wie Stabilisatoren, vgl. US-A-4,664,844, einsetzen. Besonders bewährt hat sich ein Zusatz von 0,05 bis 0,5 Gew.%, bezogen auf die gesamte Emulsion, an hochmolekularen, wasserlöslichen Homo- und Copolymerisaten von Acrylsäure, Methacrylsäure, Acrylamid oder Methacrylamid als Stabilisator. Das Einemulgieren der Ölphase (Mischung aus den Komponenten (a) bis (d)) kann unter Verwendung handelsüblicher Vorrichtungen, z.B. Dispergatoren, erfolgen.

Man erhält Öl-in-Wasser-Emulsionen, die unmittelbar nach der Herstellung eine Viskosität in dem Bereich von 300 bis 3000 mPa.s aufweisen und die eine mittlere Teilchengröße der Ölphase von unterhalb 25 µm, vorzugsweise 0,5 bis 15 µm haben.

Obwohl die Verbindungen der Komponente (d) allein oder in Mischung mit der Komponente (c) keine Wirksamkeit als Öl-in-Wasser-Emulsionsentschäumer aufweisen, tritt überraschenderweise bei der Mitverwendung mindestens einer Verbindung der Komponente (d) zusammen mit Verbindungen der Komponente (a) und/oder (b) ein synergistischer Effekt auf. Der Zusatz der Komponente (d) zu der Ölphase von Entschäumern, die die Komponenten (a) und/oder (b) in emulgierter Form enthalten, verschlechtert die Wirksamkeit der so erhältlichen Entschäumer bei tieferen Temperaturen nicht oder nur geringfügig, erhöht jedoch die Wirksamkeit dieser Entschäumer in wäßrigen Systemen, deren Temperatur oberhalb von 35°C beträgt, in einem unerwarteten Ausmaß. Die erfindungsgemäßen Entschäumer auf Basis von Öl-in-Wasser-Emulsionen sind daher vor allem in wäßrigen Systemen einsetzbar, bei denen bei höherer Temperatur die Entstehung von Schaum bekämpft werden muß, z.B. in geschlossenen Papiermaschinen-Kreisläufen, bei der Zellstoff-Kochung sowie bei der Mahlung und Dispergierung von Papierstoff und Pigmenten für die Papierherstellung.

Die erfindungsgemäßen Öl-in-Wasser-Emulsionen werden als Entschäumer in schaumbildenden wäßrigen Systemen in einer solchen Menge eingesetzt, daß auf 100 Gew.-Teile eines schaumbildenden Mediums etwa 0,02 bis 0,5, vorzugsweise 0,05 bis 0,3 Gew.-Teile der Entschäumer-Emulsion kommen. Die erfindungsgemäßen Entschäumer-Emulsionen werden insbesondere als Entschäumer bei der Herstellung von Papier verwendet, wobei sie sowohl bei der Sulfitzellstoffkochung als auch bei der Papierherstellung (Zusatz zum Papierstoff) und der Papierbeschichtung (Zusatz zu Papierstreichfarben) eingesetzt werden. Die Entschäumer können auch in der Nahrungsmittelindustrie, der Stärkeindustrie sowie in Kläranlagen bei der Schaumbekämpfung verwendet werden.

Die in den Beispielen angegebenen Teile sind Gewichtsteile, die Prozentangaben beziehen sich auf das Gewicht der Stoffe. Die mittlere Teilchengröße der in Wasser emulgierten Teilchen der Ölphase wurde mit Hilfe eines Coulter-Counters bestimmt. Die Molekulargewichte der Wachse wurden viskosimetrisch bestimmt. Der K-Wert der Polymerisate wurde nach H. Fikentscher, Cellulosechemie, Bd. 13, 58-64 und 71-74 (1932) bei einer Temperatur von 25°C in 5 %iger wäßriger Kochsalzlösung bei einer Polymerkozentration von 0,1 Gew.% bestimmt; dabei bedeut $K = k \cdot 10^3$.

Bestimmung des Schaumwertes:

In einer Rinne aus einem durchsichtigen Kunststoff werden jeweils 5 l einer schaumentwickelnden Papierstoffsuspension 5 Minuten umgepumpt. Die an der Oberfläche der Stoffsuspension gebildete Schaummenge wird dann mit Hilfe eines Rasters an der Wand der Rinne in Flächeneinheiten (cm$^2$) gemessen und als sogenannter Schaumwert zur Beurteilung der Wirksamkeit eines Entschäumers angegeben.

Pumpt man die Papierstoffsuspension in Abwesenheit eines Entschäumers um, so beträgt der Schaumwert nach 5 Minuten 1 200 cm$^2$. Durch die Zugabe von jeweils 2 mg/l eines wirksamen Entschäumers (insgesamt 10 mg fest) zu der Papierstoffsuspension wird dieser Wert deutlich reduziert, so daß er ein Maß für die Wirksamkeit eines Entschäumers darstellt.

Prüfung der Entschäumer:

Die Temperatur der Papiersuspension beträgt je nach Prüfung 20, 50 oder 60°C. Bei Verwendung der wärmeren Stoffsuspension wird eine Schaumrinne mit luftisolierten Wänden verwendet. Die Temperatur der Stoffsuspension wird mittels eines, mit einem Regler verbundenen Tauchsieders konstant gehalten. Die Temperatur der Suspension bleibt während der Prüfung konstant auf z.B. $50 \pm 1°C$.

Da der Schaumnullwert bei 20, 50 und 60°C unterschiedlich ist, wird die Wirksamkeit eines Entschäumers als % Restschaum dargestellt.

Der % Restschaum (R) wird berechnet als

$$R = \frac{S_e \cdot 100}{S_o} ,$$

wobei $S_e$ der Schaumwert bedeutet, der nach Zugabe eines Entschäumers und $S_o$ der Schaumnullwert ist, d.h. der Wert, der in Abwesenheit eines Entschäumers gemessen wird. In dieser Terminologie ist der Entschäumer um so besser je kleiner R ist.

Beispiel 1

Mit Hilfe eines Dispergators wird eine Öl-in-Wasser-Entschäumer-Emulsion hergestellt, bei der die Ölphase zu 30 Gew.% am Aufbau der Emulsion beteiligt ist und eine mittlere Teilchengröße von 2 bis 5 $\mu$m hat.

Die Ölphase besteht aus folgenden Komponenten:

(a) 23,5 Teilen eines Fettalkoholgemisches von $C_{16}$- bis $C_{20}$-Alkoholen
(b) 2,0 Teile Glycerintriester von $C_{16}$- bis $C_{18}$-Fettsäuren
(c) 2,0 Teilen eines Mineralöls (handelsübliches Weißöl) und
(d) 2,5 Teilen eines Fettalkoholgemisches von $C_{28}$-bis $C_{32}$-Fettalkoholen.

Die Wasserphase besteht aus:
65,6 Teilen Wasser,
3,5 Teilen eines Emulgators, der erhältlich ist durch Anlagern von 25 Mol Ethylenoxyd an 1 Mol Isooctylphenol und Verestern des Anlagerungsprodukts mit Schwefelsäure zum Halbester, 0,7 Teilen eines Copolymerisats aus 70 % Acrylamid und 30 % Acrylsäure vom K-Wert 270 und 0,2 Teilen Natronlauge.

Die Komponenten (a) bis (d) wurden zunächst bis auf eine Temperatur von 110°C erhitzt und dann in die wäßrige Phase unter Dispergieren zugefügt. Die so erhältliche Öl-in-Wasser-Emulsion hat bei einer Temperatur von 20°C unmittelbar nach der Herstellung eine Viskosität von 1950 mPa.s. Die Wirksamkeit dieser Entschäumer-Emulsion wird, wie oben beschrieben, an einem Papierstoff getestet. Für den Restschaumwert R in % erhält man bei den jeweils für den Papierstoff verwendeten Temperaturen folgende Ergebnisse:

| T (°C) | R [%] |
|--------|-------|
| 20 | 24 |
| 50 | 15 |
| 60 | 30 |

Vergleichsbeispiel 1

Man stellt eine Öl-in-Wasser-Emulsion nach der im Beispiel 1 angegebenen Vorschrift mit den Ausnahmen her, daß man die Komponente (d) fortläßt und den Anteil des Fettalkoholgemisches der Komponente (a) auf 26 Teile erhöht. Man erhält eine Entschäumer-Emulsion, deren Viskosität unmittelbar nach der Herstellung 600 mPa.s bei 20°C beträgt. Bei der Prüfung dieser Emulsion ergeben sich für die in der Tabelle angegebenen Temperaturen des Papierstoffs folgende Restschaumwerte in Prozent.

| T (°C) | R [%] |
|--------|-------|
| 20 | 16 |
| 50 | 40 |
| 60 | 57 |

Vergleicht man diese Werte mit dem Restschaum gemäß Beispiel 1, so sieht man, daß der Schaumwert der Vergleichsemulsion bei 20°C etwas besser ist als derjenige der Entschäumer-Emulsion gemäß Beispiel 1. Wird die Temperatur der Papierstoffsuspension bei der Prüfung jedoch auf 50 bzw. 60°C erhöht, so wird die Überlegenheit der Entschäumer gemäß Beispiel 1 gegenüber den Entschäumern gemäß Vergleichsbeispiel 1 deutlich. Bei 60°C ist der Entschäumer gemäß Beispiel 1 fast doppelt so wirksam wie der Entschäumer gemäß Vergleichsbeispiel 1.

Beispiel 2

Zur Herstellung eines Öl-in-Wasser-Entschäumers wurde folgende qualitative Zusammensetzung von Verbindungen gewählt:

(a) Fettalkoholgemisch von $C_{16}$ - bis $C_{20}$-Alkoholen,
(b) Glyzerintriester von $C_{16}$ - bis $C_{18}$-Fettsäuren,
(c) handelsübliches Weißöl und
(d) handelsübliches Fettalkoholgemisch von $C_{28}/C_{38}$-Alkoholen.

Die quantitative Zusammensetzung der Ölphase aus den Komponenten (a) bis (d) ist in Tabelle 1 angegeben. Die Mischungen der Komponenten (a) bis (d) wurden bei einer Temperatur von 110°C geschmolzen und dann in die im Beispiel 1 angegebene Wasserphase dispergiert, so daß man eine Öl-in-Wasser-Emulsion mit einem Anteil an Ölphase von 31 % erhielt. Die mittlere Teilchengröße der dispergierten Ölteilchen in der Emulsion betrug 2 - 3 $\mu$m. Die Prüfung der Entschäumer 2.1 bis 2.4 erfolgte nach der oben gegebenen Vorschrift. Die dabei ermittelten R-Werte sind in Tabelle 1 für die einzelnen Entschäumer zusammengestellt.

Tabelle 1

| Ölphase von Entschäumer | Teile | | | | Gew.% (d), bezogen auf (a) + (b) | Restschaum R % bei | |
|---|---|---|---|---|---|---|---|
| | (a) | (b) | (c) | (d) | | 20°C | 50°C |
| 2.1 | 24,75 | 3 | 2 | 1,25 | 4,5 | 31 | 23 |
| 2.2 | 21,00 | 3 | 2 | 5,00 | 20,8 | 58 | 16 |
| 2.3 | 18,50 | 3 | 2 | 7,50 | 34,9 | 89 | 23 |
| 2.4 | 13,50 | 3 | 2 | 12,50 | 75,8 | 85 | 66 |
| Entschäumer 2.4 ist ein Vergleichsbeispiel | | | | | | | |

Beispiel 3

Nach der im Beispiel 1 angegebenen Vorschrift werden zwei Öl-in-Wasser-Emulsionen hergestellt, wobei die wäßrige Phase gemäß Beispiel 1 unverändert bleibt und die Ölphase des Entschäumers 3.1 folgende Zusammensetzung aufweist:

(a) 24,75 Teile eines Fettalkohogemisches aus $C_{16}$- bis $C_{20}$-Alkoholen,
(b) 2,0 Teile eines Glyzerintriesters von $C_{16}$- bis $C_{18}$-Fettsäuren,
(c) 2,00 Teile eines Mineralöls (handelsübliches Weißöl) und

(d) 1,25 Teile eines handelsüblichen $C_{34}/C_{42}$-Fettalkoholgemisches.

Der Entschäumer 3.2 unterscheidet sich von dem Entschäumer 3.1 nur dadurch, daß als Komponente (d) dieselbe Menge eines $C_{44}/C_{52}$-Fettalkoholgemisches eingesetzt wird. Die Emulsion 3.1 hatte unmittelbar nach der Herstellung eine Viskosität von 2400 mPa.s, die Emulsion 3.2 eine Viskosität von 2800 mPa.s (jeweils gemessen bei 20°C). Beide Emulsionen hatten eine Teilchengröße in dem Bereich von 2 bis 5 µm.

Um die Wirksamkeit der beiden Emulsionen zu demonstrieren, wurden jeweils die Schaumwerte nach der oben angegebenen Vorschrift bei 20 und 50°C gemessen und daraus der Restschaum R bestimmt. Die Ergebnisse sind in Tabelle 2 zusammengefaßt.

Tabelle 2

| R [%] für die Entschäumer | | |
|---|---|---|
| T (°C) | 3.1 | 3.2 |
| 20 | 27 | 35 |
| 50 | 14 | 13 |

**Patentansprüche**

1. Entschäumer auf Basis von Öl-in Wasser-Emulsionen, bei denen die Ölphase der Emulsionen

   (a) einen $C_{12}$- bis $C_{26}$-Alkohol, Destillationsrückstände, die bei der Herstellung von Alkoholen mit einer höheren Kohlenstoffzahl durch Oxosynthese oder nach dem Ziegler-Verfahren erhältlich und die gegebenenfalls noch alkoxyliert sind,
   (b) einen Fettsäureester von $C_{12}$- bis $C_{22}$-Carbonsäuren mit einem einbis dreiwertigen $C_1$- bis $C_{18}$-Alkohol und gegebenenfalls
   (c) einen Kohlenwasserstoff mit einem Siedepunkt oberhalb von 200°C oder Fettsäuren mit 12 bis 22 Kohlenstoffatomen

   enthält, zu 5 bis 50 Gew.% am Aufbau der Emulsion beteiligt ist und eine mittlere Teilchengröße von < 25 µm hat, dadurch gekennzeichnet, daß 5 bis 50 Gew.% der Komponenten (a) und (b) der Ölphase der Öl-in-Wasser-Emulsionen durch

   (d) mindestens eine, bei einer Temperatur oberhalb von 70°C schmelzenden Verbindung aus der Gruppe der Fettalkohole mit mindestens 28 C-Atomen und der Addukte von $C_2$- bis $C_4$-Alkylenoxiden an mindestens 28 C-Atome enthaltende Alkohole ersetzt sind.

2. Entschäumer nach Anspruch 1, dadurch gekennzeichnet, daß als Komponente (d) $C_{28}$- bis $C_{48}$-Alkohole, Addukte von Ethylenoxid an $C_{28}$-bis $C_{48}$-Alkohole oder Mischungen der genannten Verbindungen eingesetzt werden.

3. Entschäumer nach Anspruch 1, dadurch gekennzeichnet, daß als Komponente (a) ein $C_{12}$- bis $C_{26}$-Alkohol eingesetzt wird und daß 5 bis 50 Gew.% der Komponenten (a) und/oder (b) der Ölphase der Öl-in-Wasser-Emulsionen durch mindestens eine, bei einer Temperatur oberhalb von 70°C schmelzende Verbindung aus der Gruppe der Fettalkohole mit mindestens 28 C-Atomen und der Addukte von 5 bis 80 Mol Ethylenoxid an 1 Mol eines mindestens 28 C-Atome enthaltenden Alkohols ersetzt sind.

4. Verwendung der Entschäumer nach Anspruch 1 bei der Papierherstellung zur Schaumbekämpfung in wäßrigen Systemen, deren Temperatur oberhalb von 35°C liegt.

**Claims**

1. An antifoam based on an oil-in-water emulsion, in which the oil phase of the emulsion contains

(a) a $C_{12}$-$C_{26}$-alcohol, a distillation residue which is obtainable in the preparation of alcohols having a relatively large number of carbon atoms by the oxo synthesis or by the Ziegler process and which may furthermore be oxyalkylated,

(b) a fatty acid ester of a $C_{12}$-$C_{22}$-carboxylic acid with a monohydric to trihydric $C_1$-$C_{18}$-alcohol and, if required,

(c) a hydrocarbon having a boiling point above 200°C or a fatty acid of 12 to 22 carbon atoms,

accounts for from 5 to 50% by weight of the emulsion and has a mean particle size of <25 μm, wherein from 5 to 50% by weight of components (a) and (b) of the oil phase of the oil-in-water emulsion are replaced by

(d) one or more compounds which melt at above 70°C and are selected from the group consisting of the fatty alcohols of not less than 28 carbon atoms and the adducts of $C_2$-$C_4$-alkylene oxide with alcohols of not less than 28 carbon atoms.

2. An antifoam as claimed in claim 1, wherein a $C_{28}$-$C_{48}$-alcohol, an adduct of ethylene oxide with a $C_{28}$-$C_{48}$-alcohol or a mixture of the stated compounds is used as component (d).

3. An antifoam as claimed in claim 1, wherein a $C_{12}$-$C_{26}$-alcohol is used as component (a) and from 5 to 50% by weight of the components (a) and/or (b) of the oil phase of the oil-in-water emulsion are replaced by one or more compounds which melt at above 70°C and are selected from the group consisting of the fatty alcohols of not less than 28 carbon atoms and the adducts of from 5 to 80 moles of ethylene oxide with 1 mole of an alcohol of not less than 28 carbon atoms.

4. The use of an antifoam as claimed in claim 1 in papermaking for suppressing foam in aqueous systems at above 35°C.

**Revendications**

1. Agents antimousse, à base d'émulsions huile-dans-eau, chez lesquels la phase huile ou oléophase des émulsions contient

(a) un alcool en $C_{12}$ à $C_{26}$, des résidus de distillation que l'on peut obtenir au cours de la préparation d'alcools avec un nombre de carbone supérieur, par oxosynthèse ou par mise en oeuvre du procédé de Ziegler et qui sont éventuellement encore alcoxylés,

(b) un ester d'acides gras d'acides carboxyliques en $C_{12}$ à $C_{22}$, avec un alcool en $C_1$ à $C_{18}$ monohydroxylé à trihydroxylé et éventuellement

(c) un hydrocarbure qui possède un point d'ébullition supérieur à 200°C, ou des acides gras qui comportent de 12 à 22 atomes de carbone,

participe pour 5 à 50% en poids à la composition de l'émulsion et possède un calibre moyen des particules inférieur à 25 μm, caractérisés en ce que 5 à 55% en poids des composants (a) et (b) de la phase huile ou oléophase des émulsions huile-dans-eau sont remplacés par

(d) au moins un composé qui fond à une température supérieure à 70°C et qui appartient au groupe des alcools gras ou aliphatiques à au moins 28 atomes de carbone et les adduits d'oxydes d'alkylène en $C_2$ à $C_4$ et d'alcools qui contiennent au moins 28 atomes de carbone.

2. Agents antimousse selon la revendication 1, caractérisés en ce qu'à titre de composant (d), on met en oeuvre, des alcools en $C_{28}$-$C_{48}$, des adduits de l'oxyde d'éthylène et d'alcools en $C_{28}$-$C_{48}$, ou des mélanges des composés précités.

3. Agents antimousse suivant la revendication 1, caractérisés en ce qu'à titre du composant (a), on met en oeuvre un alcool en $C_{12}$ à $C_{26}$ et en ce que de 5 à 50% en poids des composants (a) et/ou (b) de la phase huile ou oléophase des émulsions huile-dans-eau sont remplacés par au moins un composé qui fond à une température supérieure à 70°C et qui appartient au groupe des alcools gras ou aliphatiques avec au moins 28 atomes de carbone et les adduits de 5 à 80 modes d'oxyde d'éthylène et d'une mode d'un alcool qui contient au moins 28 atomes de carbone.

4. Utilisation des agents antimousse suivant la revendication 1 au cours de la fabrication du papier pour empêcher la formation de mousse dans des systèmes aqueux dont la température est supérieure à 35°C.